# EUROPEAN PATENT APPLICATION

(11) **EP 4 106 150 A1**
(43) Date of publication of application: **21.12.2022**
(21) Application number: 21179215.5
(22) Date of filing: 14.06.2021
(51) Int. Cl.: H02K 1/18, H02K 7/18, H02K 1/20, H02K 5/20

(54) **SUPPORT STRUCTURE SEGMENT FOR A STATOR OF A GENERATOR OF A WIND TURBINE AND WIND TURBINE**

(71) Applicant: Siemens Gamesa Renewable Energy A/S, 7330 Brande (DK)
(72) Inventor: Jensen, Simon Vyff, 7160 Tørring (DK)
(74) Representative: SGRE-Association

(57) **Abstract**

Support structure segment (19, 19a, 19b, 19c) for a stator (6) of an, in particular direct-drive, generator (5) of a wind turbine (1), wherein the support structure segment (19, 19a, 19b, 19c) comprises at least one longitudinal carrier element (21), which extends in an axial direction (12) and comprises a stator-sided attachment section (26) for fixing the carrier element (21) to a stator segment (17) of the stator (6), wherein the monolithic carrier element (21) has a rectangular, hollow profile.

## Description

The invention concerns a support structure segment for a stator of an, in particular direct-drive, generator of a wind turbine, wherein the support structure segment comprises at least one longitudinal carrier element, which extends in an axial direction and comprises a stator-sided attachment section for fixing the carrier element to a stator segment of the stator. The invention further concerns a wind turbine in which such a support structure segment is used.

Wind turbines usually comprise blades mounted to a rotor hub, such that the wind energy can be transformed into rotational mechanical energy, that is, a rotation of the hub. To generate electrical power from this rotation, the wind turbine comprises a generator having a stator and a rotor, wherein the rotation of the rotor hub is transferred to a rotation of the rotor of the generator. In direct-drive wind turbines, no gearbox is used, that is, the rotation of the rotor hub is directly used as a rotation of the rotor.

The rotor usually comprises magnets, in particular permanent magnets, wherein, by rotation of the permanent magnets relative to stator coils formed by stator windings, electrical current is induced through the stator windings. While configurations in which an inner rotor surrounded by an outer stator is used have been proposed, in most configurations, an outer rotor surrounds an inner stator. For example, a hollow shaft may be connected to the bedframe in the nacelle, to which a stator support structure is mounted, which may comprise two end plates, one on the drive end and one on the non-drive end. For reasons for transportability, the stator itself is usually divided into stator segments, which each comprise a lamination stack defining stator teeth and carrying the stator windings. In known designs, each of the stator segments, which may, for example, cover an angle interval of 45°, 30° or even less each, are attached to corresponding support structure segments. These, in turn, can be mounted to the end plates.

The stator support structure usually not only ensures a defined positioning of the stator segments relative to the magnets of the rotor, but also has to prevent collisions between the stator and the rotor, in particular taking into account the strong radial and tangential electromagnetic forces generated during operation of the generator. Additionally, the stator support structure prevents the occurrence of coinciding eigenfrequencies of the segmented assembly and electromagnetic excitation force frequencies. Finally, the stator support structure has to withstand all load conditions of the generator, also in long term scenarios, that is, preferably, during the whole lifetime of the generator.

For fixing the stator segments to the support structure segments, multiple designs have been proposed in the state of the art. For example, welded connections between the lamination stack and the support structure segments are known as well as bolted connections. However, these known designs are often rather complex and expensive.

In the bolted design, to provide enough stiffness, a large amount of material and complex bending of plates as well as complex welds are needed. For example, the support structure segments may comprise at least one carrier element, to which the lamination stack of the stator segment is concretely coupled. For providing sufficient stability, in an attachment section of the carrier element, which is on the stator side, a large surface is required.

WO 2018/197057 discloses a support structure segment for a generator of a wind turbine, which comprises bended profiles as carrier elements. The carrier elements comprise a top section for connection to the lamination stack, at least one side section and at least one base section. In particular, the base section, the side section, the top section, a further side section, and a further base section of the carrier element may describe an Ω-type profile. These Ω profiles are usually joined by internal and external tangential stiffeners, for example metal plates, which are welded to the profiles. This significantly increases the complexity and the cost of such a support structure segment. Additionally, the extensive amount of welding induces deformation in the support structure, such that high requirements regarding position result. Regarding the connection between the support structure segment and the stator segment, exemplary embodiments are described in EP 3 672 025 A1. For example, a halfmoon shaped rod may be inserted into a slot of the lamination stack and connected to the support structure segment by bolts extending through the top section of an Ω profile into the rod, forming a dove-tail connection.

Stators of direct drive wind turbines also need to be cooled, since a large amount of heat can be generated in the stator windings. In this respect, several concepts, which for example want to transfer cold air from the non-drive end side to the drive end side of the generator or want to provide cooling to the non-rotor side of the stator segment, would require defined cooling channels in the support structure segment. In current, open designs, in particular when using Ω profiles, such cooling channels can only be provided by adding additional elements to the support structure segment.

It is an object of the current invention to provide a support structure segment design reducing the complexity and cost compared to previous designs.

This object is achieved by providing a support structure segment and a wind turbine according to the independent claims. Advantageous embodiments are described by the dependent claims.

In a support structure segment as initially described, the monolithic carrier element has a rectangular, hollow profile.

It is thus proposed to replace a known carrier element from the state of the art by one-piece rectangular profiles, which are extremely stable, provide large surfaces in an attachment section for connection to the stator segment, in particular lamination stack, and are readily commercially available, that is, cost can be reduced. Standard known rectangular profiles may be cut in length to yield stable carrier elements.

It should be noted at this point that, in most embodiments, the support structure segment will include more than one carrier element, since stator segments and, analogously, support structure segments usually span an angular interval of, for example, 30° to 60° in a circumferential direction. For example, a support structure segment may comprise three to seven carrier elements or even more carrier elements. The carrier elements usually at least span an axial length at least between two pressure plates, which are provided to directly or indirectly pressurize the lamination stack (stack of lamination sheets) and extend in the circumferential direction. These pressure plates, to which the carrier elements are usually fixed, for example by welding, may already act as a lateral stiffener, improving the stability of the whole support structure segment.

The directions mentioned in this description refer to the generator and its rotational axis. An axial direction is parallel to the rotational axis of the generator, a radial direction is the respective direction to or from the rotational axis perpendicular to the axial direction and the circumferential direction is perpendicular to both radial direction and the axial direction.

As already mentioned, the support structure segment preferably comprises pressure plates at each axial end of the support structure segment, wherein the at least one carrier element may preferably extend beyond the respective pressure plates in the axial direction. In this manner, as in principle known from the art, the extended carrier element is adapted to carry the whole stator segment, in particular also an overhang, independent of the distance between the pressure plates. As also known from the state of the art, the portion of the carrier element protruding over the pressure plates may be chamfered in the direction or their axial ends on the non-stator side.

Regarding the pressure plates and the continuation of the carrier elements beyond the pressure plates, multiple configurations are conceivable according to the current invention.

In a first, less preferred alternative, each pressure plate may be inserted into a respective cutout in the carrier element or the carrier element may be divided into a main portion extending between the pressure plates and two separate overhang portion mounted, in particular welded, to the outer surface of the pressure plates. As already mentioned, the rectangular profile used as carrier element is hollow, thus forming an inner, axially extending chamber. According to this first, less preferred embodiment, this inner axial chamber of the carrier elements, in particular the main portions, will be closed, that is, blocked by the presence of the pressure plate. This may prevent further use of this inner axial chamber.

Alternatively, however, in a preferred embodiment of the invention, the at least one carrier element may be inserted into respective cutouts of the pressure plates. That is, the rectangular, hollow, monolithic profile does not have to be modified, such that a continuous axial channel is formed through the hollow carrier element. This continuous axial channel may advantageously be used as a cooling air channel of a cooling arrangement for the generator, for example for transferring cooling air from the drive end side to the non-drive end side or vice versa and/or to even provide cooling to the support structure segment and relevant locations, where, via the attachment section, heat from the stator segment may be introduced into the support structure segment. In this configuration, the current invention also improves cooling of the generator.

In general embodiments of the current invention, the attachment section of each carrier element may comprise through holes for fixation means fixing the stator segment to the carrier element. That is, on the stator side of the rectangular profiles, which forms the attachment section, through holes are provided for fixation means, in particular bolts to connect the carrier element to the lamination stack of the stator segment. It is noted that, also regarding the through holes, the embodiment wherein the carrier elements are inserted into respective cutouts of the pressure plates is preferred, since through holes can be provided over the whole length without any disruption at the position (and thickness) of the pressure plates. In other words, the pressure plate will not impede securing an identical pattern of fixation means, in particular bolts, along the full length of the stator segment.

Preferably, each carrier element, in this context, comprises access holes in a base section on the non-stator side. These access holes will usually have a larger diameter or generally larger dimensions than the through holes in the attachment section on the stator side, which may also be called the top side. Through the access holes on the non-stator side (bottom side), tools for working with the fixation means, for example to tighten the bolts, can be introduced.

In this context, in particular if the continuous axial channel through the at least one hollow carrier element is to be used as a cooling air channel, the support structure segment may further comprise closure means for closing the access holes, for example simple, easy to remove molded plastic pieces.

If, as usual, the support structure segment comprises multiple carrier elements extending parallelly in the axial direction, preferably, for each adjacent pair of carrier elements, at least one stabilizing plate, in particular as part of a ring structure, extends in a circumferential direction between these carrier elements. The stabilization plates, which may, as the pressure plates and the carrier elements, be made of metal, function as a lateral stiffener for the support structure segment. That is, in between the rectangular profiles, simple tangential stabilization plates may be joining the rectangular profiles, i.e. the carrier elements, together, for example with simple welds, further reducing the complexity and cost and simplifying the manufacturing of the support structure segment. In particular, the rectangular profile can be understood as comprising the (top) attachment section, the opposing base section and two side sections connecting the base and attachment sections, wherein the stabilizing plates may extend between opposing side sections of the carrier elements. In particular if the inner axial chamber of the carrier elements is used as a cooling channel, the stabilization plates may be imperforate, that is, no through holes have to be manufactured. The stabilizing plates may be welded and/or bolted, in particular using brackets, to the carrier elements, wherein welding is preferred.

For example, to manufacture a support structure segment according to the invention, a rectangular profile may be cut in the full length of the lamination stack to provide the carrier elements. In the pressure plates, cutouts may be made, wherein the full-length rectangular profiles can be inserted as the carrier elements. Thereafter, the carrier elements may be fully welded to the pressure plates and the tangential stiffeners, that this, the stabilization plates, may be added. These may also be simply welded to the carrier elements. In an alternative, after insertion into the cutouts of the pressure plates, the carrier elements may be fully bolted to the pressure plates as well as to the tangential stiffeners, in particular by using simple brackets.

Generally, the carrier elements are monolithic, that is, are single piece elements and not constituted by multiple different components, as such rectangular profiles are readily available on the market, such that no further modifications are necessary, in particular no assembling steps for the carrier elements. It is noted that the corners of the rectangular profile may be slightly rounded to further improved stability.

The support structure segment, as described herein, is preferably used with a generator design having an inner stator and an outer rotor. However, the support structure segment may also be used in a configuration, in which the stator is arranged radially outward with respect to the rotor.

Regarding the fixation means, the term may describe any connection suitable to couple the lamination stack to the carrier elements of the support structure segment. For example, a dove-tail connection may be used, in which, for example, bolts are fixed into a counter bearing element. For example, fixation means as described in EP 3 672 025 A1 may be used.

Regarding the stabilization plates, multiple options exist which may both be employed in the current invention. In one embodiment, the stabilization plate may extend essentially from one circumferential end of the support structure segment to the opposite circumferential end of the support structure segment and comprise cutouts for receiving the carrier elements. In this manner, the stabilization plates provide mechanical stabilization to the plurality of carrier elements by connecting the carrier elements in circumferential direction. The carrier elements are held firmly and accurately in place, which enables the stable coupling of the lamination stack of the stator segment to the support structure segment by fixation means. The stabilization plates of multiple segments forming a ring can be understood as a ring structure.

In another embodiment, a plurality of stabilization plates may be aligned in the circumferential direction from one circumferential end to the opposite circumferential end. In this embodiment, a plurality of stabilization plates coupled to two adjacent carrier elements are used to provide mechanical stabilization to the plurality of carrier elements. These single, yet aligned stabilization plates may also be understood as forming a ring structure in the completed ring of segments.

It should be noted that, in less preferred embodiments, stabilization plates can also be alternatively or additionally provided as top plates or bottom plates connection the carrier elements. Such configurations may also be combined, for example in having a top plate, a bottom plate and intermediate stabilization plates.

Stabilization plate/ring structures may, of course, be provided at multiple axial positions depending on the degree of stabilization required.

It is noted that certain features of support structure segments, as known from the art, may also be employed in the support structure segment according to the invention, although not described in detail here, for example finger plates.

Regarding the connection of adjacent segments (segment-to-segment connection) to form a complete ring from the segments, in a preferred embodiment of the invention, if the support structure segment comprises multiple carrier elements extending parallelly in the axial direction, sidewalls of the two circumferentially outmost carrier elements may form side surfaces of the support structure segment, wherein at least one segment connection structure may be provided at these side surfaces. For example, steel plates and/or connection holes may be provided to facilitate segment-to-segment connection, in particular based on designs known from the state of the art.

The invention also concerns a wind turbine, comprising a direct drive generator having a stator with at least one stator segment, wherein each stator segment is supported by a support structure segment according to the invention. All features and remarks regarding the support structure segment apply mutatis mutandis to the wind turbine, such that the same advantages can be achieved.

In a particularly preferred embodiment, the wind turbine may further comprise a cooling arrangement for the stator, wherein the cooling arrangement comprises a continuous axial channel through the at least one hollow carrier element as a cooling air channel. In this manner, as explained above, the rectangular profile not only simplifies the construction of the support structure segment, but also provides a natural axial channel which can be used as a cooling channel. It is noted that, in particular, such design obviates the need for cutouts for cooling air in stabilization plates and/or pressure plates, which may in particular be imperforate.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematical sectional view of a wind turbine according to the invention,
- Fig. 2: a schematical sectional view of the generator of the wind turbine of fig. 1,
- Fig. 3: a perspective upper view of a first embodiment of a support structure element according to the invention,
- Fig. 4: a perspective bottom view of the first embodiment of fig. 3,
- Fig. 5: a perspective front view of a second embodiment of the support structure element according to the invention,
- Fig. 6: a close-up-view of the second embodiment of fig. 5,
- Fig. 7: a perspective view of a third embodiment of the support structure element according to the invention, and
- Fig. 8: a top view of the third embodiment of fig. 7.

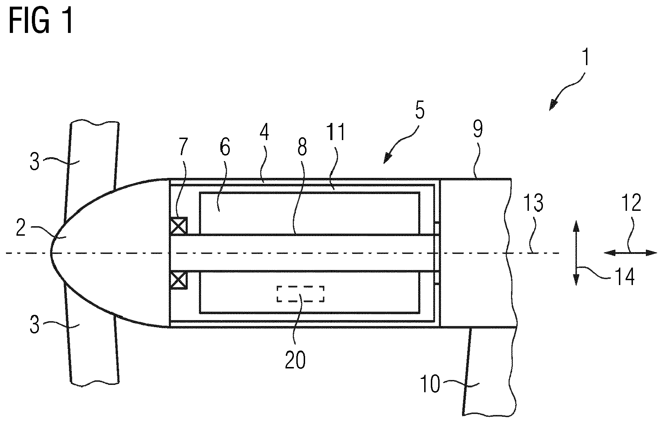

Fig. 1 is a principle drawing of a wind turbine 1 according to the invention. The wind turbine 1 is a direct-drive wind turbine which can be used in onshore as well as in offshore applications.

The wind turbine 1 comprises a rotor hub 2 to which multiple rotor blades 3, for example three blades 3, are mounted. The rotational movement of the rotor hub 2 generated by wind on the plates 3 is directly transferred to a rotor 4 of a generator 5, wherein the rotor 4 comprises at least one permanent magnet (not shown in fig. 1) and is rotatable against a stator 6 via a bearing 7 on a hollow shaft 8. The hollow shaft 8 is continued into a nacelle 9, which is mounted on a tower 10 only indicated in fig. 1 and where the hollow shaft may be mounted to a bedframe.

In this case, an inner stator 6 - outer rotor 4 configuration is used, wherein the stator 6 and the rotor 4 are distanced radially by an air gap 11. Fig. 1 also indicates an axial direction 12 along the rotation axis 13 as well as the radial direction 14.

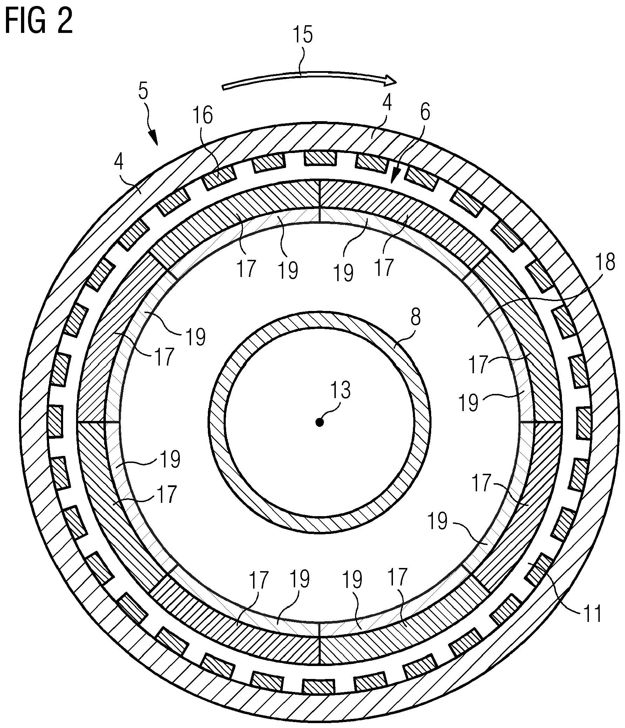

Fig. 2 shows a schematical sectional view of the generator 5, also indicating the circumferential direction 15. As can be seen, multiple permanent magnets 16 are arranged on the rotor 4 on a stator-facing side. The stator 6 comprises multiple stator segments 17, each in turn comprising a lamination stack, that is, a stack of lamination sheets, to which the stator windings forming the stator coils are mounted. In this example, eight stator segments 17 are used. In this manner, the stator windings face the permanent magnets 16 via the air gap 11, such that upon movement of the rotor 4 with respect to the stator 5, electrical current is induced into the stator coils.

The stator 6 is mounted on the hollow shaft 8 via a stator support structure 18, which comprises end plates (not shown) on the non-drive end side and on the drive end side. Each stator segment 17 is supported on a separate support structure segment 19 according to the invention. The support structure segments are connected to each other by connection means using segment connection structures further described below.

It is noted that, in this embodiment, the generator 5, in particular the stator 6, is cooled by a cooling arrangement 20 only schematically indicated in fig. 1.

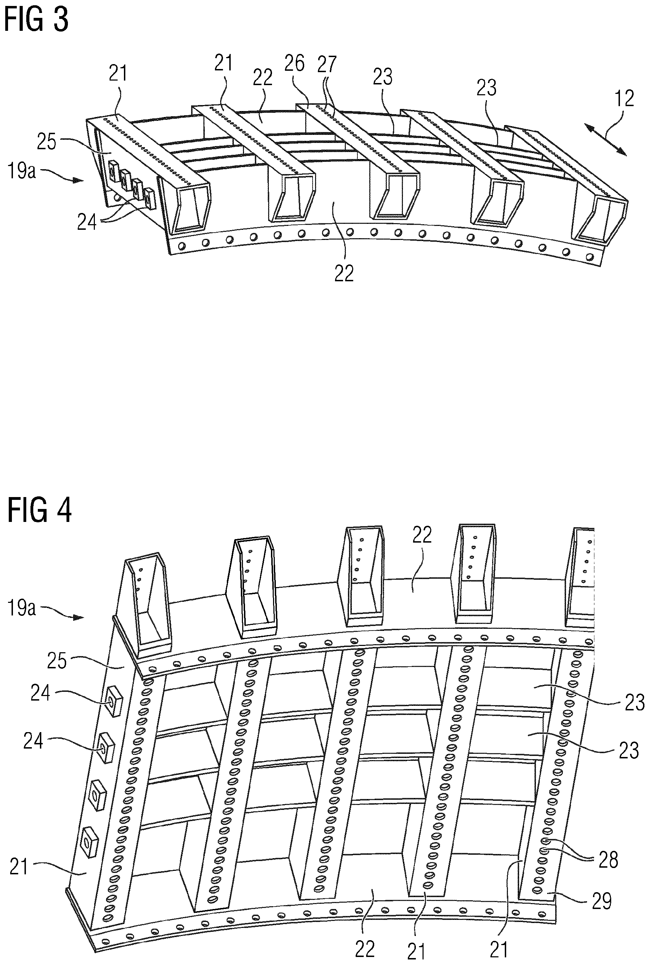

Figures 3 and 4 show a first embodiment of a support structure segment 19a according to the invention. The support structure segment 19a comprises multiple carrier elements 21 extending in the axial direction 12. The carrier elements are made from monolithic rectangular hollow metal profiles and are connected, in this embodiment welded, to two pressure plates 22 at the axial ends of the support structure segment 19a and to stabilization plates 23 acting as lateral stiffeners. As can be seen, the carrier elements 21 protrude over the pressure plates forming a protruding portion, which is chamfered as known in the state of the art. In this embodiment, the carrier elements 21 comprise cutouts into which the pressure plates 22 can be inserted, thus closing the inner chamber of the rectangular profile, which is less preferred. In an alternative, also less preferred embodiment, instead of cutouts in the carrier elements 21, the carrier elements 21 may also be divided into main portions extending between the pressure plates and welded to them, and two separate overhang portions mounted, in particular also welded, to the axially outer surface of the pressure plates 22.

As also discernible from figures 3 and 4, the support structure segment 19a further comprises segment connection structures 24 on at least one side surface 25 of the support structure segment 19a for connecting adjacent support structure segments 19a in a manner principally known in the art. These segment connection structures 24 may include connection holes through the side portions of the rectangular profiles forming the carrier elements 21.

On the top of the carrier elements 21, in a stator-sided attachment section 26 of each carrier element, through holes 27 are provided for fixation means fixing the stator segment 17, in particular its lamination stack, to the respective carrier element 21. In particular, the through holes may receive bolts for a bolted connection of the carrier elements 21 to the lamination sheets of the lamination stack. For example, connection techniques like those described in WO 2018/197057 A1 or EP 3 672 025 A1 may be used. To provide access to these through holes 27, access holes 28 are provided in the non-stator side base section 29 of the carrier elements 21.

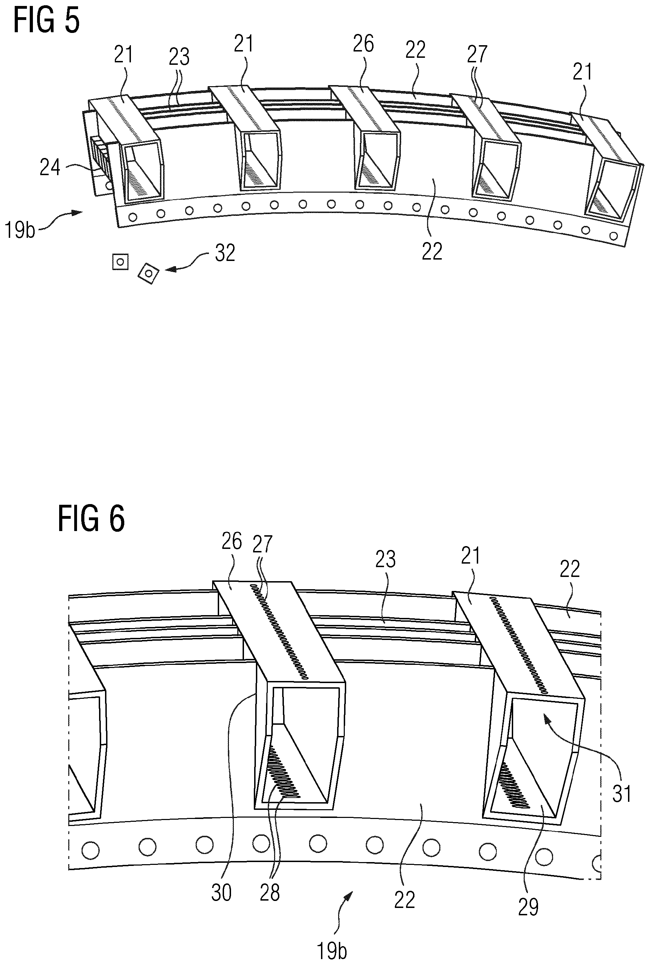

A second embodiment of a support structure segment 19b according the invention is shown in figures 5 and 6. For simplicity, corresponding elements have the same numerals.

As a difference to the first embodiment, the pressure plates 22 now comprise cutouts 30 for receiving the carrier elements 21 such that a continuous axial channel 31 exists through each of the hollow carrier elements 21. As in the first embodiment, the carrier elements 21, the pressure plates 22 and the stabilization plates 23 are welded together.

This embodiment is preferred since the continuous axial channel 31 may be used as a cooling air channel of the cooling arrangement 20. To this end, closure means 32, for example closure elements, as indicated in fig. 5 may be provided for closing the access holes 28 and thus the continuous axial channel 31. The closure means 32 may be made of molded plastic and may alternatively be provided for one complete carrier element 21.

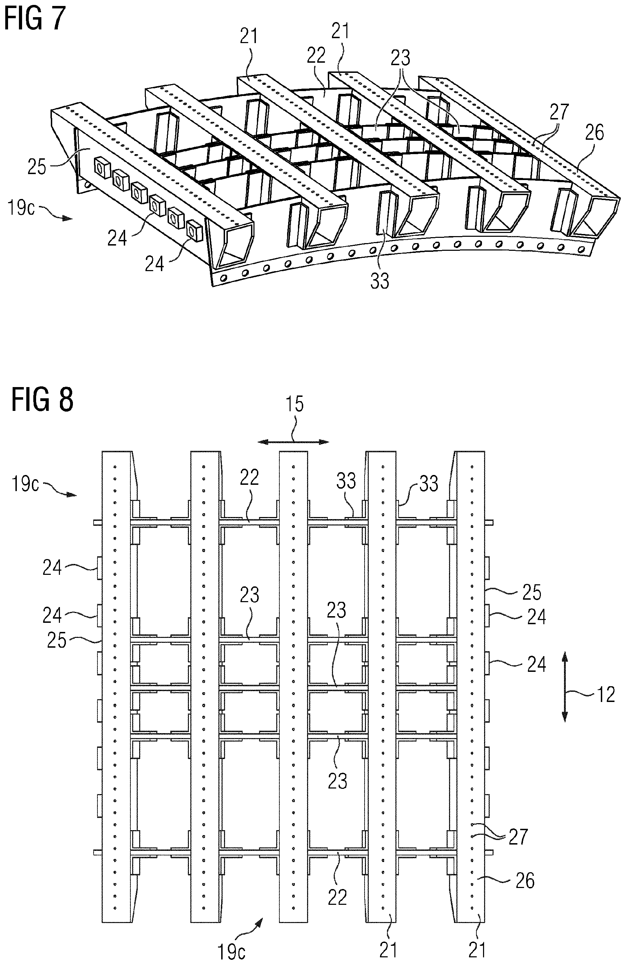

Figures 7 and 8 show a third embodiment of a support structure segment 19c according to the invention. The only difference to the embodiment of figures 5 and 6 is that the carrier elements 21 and the pressure plates 22 / stabilization plates 23 are not connected by welding, but by a fully bolted connection using brackets 33, wherein, for simplicity, the bolts are not shown. Furthermore, the embodiment is longer in an axial direction, showing that the length can easily adapting by cutting shorter or longer pieces from a basic, commercially available monolithic rectangular profile.

It is noted that also the extension in circumferential direction, in particular the angular interval covered, can of course be varied, for example by using differently cut pressure plates 22 and another number of carrier elements 21.

Although the present invention has been described in detail with reference to the preferred embodiment, the present invention is not limited by the disclosed examples from which the skilled person is able to derive other variations without departing from the scope of the invention.

## Claims

1. Support structure segment (19, 19a, 19b, 19c) for a stator (6) of an, in particular direct-drive, generator (5) of a wind turbine (1), wherein the support structure segment (19, 19a, 19b, 19c) comprises at least one longitudinal carrier element (21), which extends in an axial direction (12) and comprises a stator-sided attachment section (26) for fixing the carrier element (21) to a stator segment (17) of the stator (6), **characterized in that** the monolithic carrier element (21) has a rectangular, hollow profile.

2. Support structure segment (19, 19a, 19b, 19c) according to claim 1, **characterized in that** it further comprises pressure plates (22) at each axial end of the support structure segment (19, 19a, 19b, 19c), wherein the at least one carrier element (21) extends beyond the respective pressure plates (22) in the axial direction (12).

3. Support structure segment (19, 19a, 19b, 19c) according to claim 2, **characterized in that** each pressure plate (22) is inserted into a respective cutout in the carrier element (21) or the carrier element (21) may be divided into a main portion extending between the pressure plates (22) and two separate overhang portions mounted, in particular welded, to the outer surface of the pressure plates (22).

4. Support structure segment (19, 19a, 19b, 19c) according to claim 2, **characterized in that** the at least one carrier element (21) is inserted into respective cutouts (30) of the pressure plates (22).

5. Support structure segment (19, 19a, 19b, 19c) according to one of the preceding claims, **characterized in that** the attachment section (26) of each carrier element comprises through holes (27) for fixation means fixing the stator segment (17) to the carrier element (21).

6. Support structure segment (19, 19a, 19b, 19c) according to claim 5, **characterized in that** each carrier element (21) comprises access holes (28) in a base section (29) on the non-stator side.

7. Support structure segment (19, 19a, 19b, 19c) according to claim 6, **characterized in that** it further comprises closure means (32) for closing the access holes (28).

8. Support structure segment (19, 19a, 19b, 19c) according to one of the preceding claims, **characterized in that** it comprises multiple carrier elements (21) extending parallelly in the axial direction (12), wherein, for each adjacent pair of carrier elements (21), at least one stabilizing plate (23), in particular as part of a ring structure, extends in a circumferential direction (15) between these carrier elements (21) .

9. Support structure segment (19, 19a, 19b, 19c) according to claim 8, **characterized in that** the stabilizing plates (23) are welded and/or bolted, in particular using brackets, to the carrier elements (21).

10. Support structure segment (19, 19a, 19b, 19c) according to one of the preceding claims, **characterized in that** it comprises multiple carrier elements (21) extending parallelly in the axial direction (12), wherein side walls of the two circumferentially outmost carrier elements (21) form side surfaces (25) of the support structure segment (19, 19a, 19b, 19c), wherein at least one segment connection structure (24) is provided at at least one of the side surfaces (25).

11. Wind turbine (1), comprising a direct drive generator (5) having a stator (6) with at least one stator segment (17), wherein each stator segment (17) is supported by a support structure segment (19, 19a, 19b, 19c) according to one of the preceding claims.

12. Wind turbine (1) according to claim 11, **characterized in that** it further comprises a cooling arrangement (20) for the stator (6), wherein the cooling arrangement (20) comprises a continuous axial channel (31) through the at least one hollow carrier element (21) as a cooling air channel.
